# EUROPEAN PATENT APPLICATION

(11) **EP 4 524 031 A1**
(43) Date of publication of application: **19.03.2025**
(21) Application number: 23196823.1
(22) Date of filing: 12.09.2023
(51) Int. Cl.: B64C 1/06, F16B 5/06

(54) **AIRCRAFT INTERIOR LINING ARRANGEMENT, LONGITUDINAL GAP COVER, INTERIOR PANEL AND INSTALLATION METHOD**

(71) Applicant: Airbus Operations GmbH, 21129 Hamburg (DE)
(72) Inventor: Roth, Ingo, 21129 Hamburg (DE)

(57) **Abstract**

Disclosed is an aircraft interior lining arrangement wherein a gap cover having a visible portion and at least one rear retaining portions is installed from the frontside of lining panels in a first direction and then pushed in a second direction which is different to the first direction in order to get the gap cover in backside engagement with the panels, a gap cover, a panel and an installation method.

## Description

The present invention refers to an aircraft interior lining arrangement, a longitudinal gap cover, an interior panel and a method to install an aircraft interior lining arrangement.

An aircraft interior lining arrangement of an aircraft cabin comprises a plurality of individual interior panels, such as side panels, ceiling panels or dado panels. The arrangement serves for a visual design of the aircraft cabin. Furthermore, the arrangement forms a cabin-side boundary of a space present between the interior lining arrangement and an aircraft structure. The space is used as an installation space for a large number of components, such as thermal insulation, electrical lines, air or water-conducting lines or other components of the aircraft. Due to installation reasons, a longitudinal gap is formed between mutually adjacent interior panels. As the gap extends from the cabin interior to the installation space, a gap cover is provided adapted to close the gap. According to a known solution, a strip is provided in guiding means on the backside of the panels. During installation, the stripe is pushed over its entire length in the guiding means. Finally, the gap is closed, but still visible from the cabin-side. However, pushing the strip forward in guiding means on the backside of the panels is difficult from an installation point of view and time consuming. Further on, in order to create a uniform visual design, the gaps need to be adjusted to a single width.

It is an object of the present invention to provide an alternative aircraft interior lining arrangement, enabling a simplified installation and a compensation in minor faults in alignments. It is a further object of the invention to provide a longitudinal gap cover which is easy to install and covers a gap from the cabin-side, an interior panel enabling an easy gap cover installation and a simplified method for installation an aircraft interior lining arrangement.

The object is achieved by an aircraft interior lining arrangement with the features of claim 1, by a longitudinal gap cover with the features of claim 12, by an interior panel with the features of claim 13 and by a method with the features of claim 14. Advantageous embodiments are disclosed in the dependent claims, the description and the figures.

According to the invention, an aircraft interior lining arrangement comprises two mutually adjacent interior panels lining an interior of an aircraft, wherein the interior panels including edges facing one another to define a longitudinal gap. The arrangement further comprises a longitudinal gap covering device which has a visible portion facing towards the interior of the aircraft after installation and at least one retaining portion which is connected to the visible portion via at least one intermediate portion and extends opposite the visible portion. The at least one retaining portion is sized to abut and get into engagement backside of the interior panels.

Further on, in the edges of the interior panel at least one recess is provided. The at least one recess is adapted to receive the at least one retaining portion during installation. The visible portion has a width which is adapted to cover the recesses after installation.

Alternatively, the edges of the interior panels are inclined to each other such that the gap has a tapered shape from its bottom end to its top end or vice versa. The visible portion has a width which is adapted to cover the gap at its area with the broadest extension in transversal direction after installation.

According to the invention, the cover need not to be pushed over its entire length on the backside of the interior panels. Due to the recesses, the cover can be positioned directly on the interior side of the panels and then need to be pushed only over a small distance in longitudinal direction in order to get the retaining portions in engagement with the backside of the panels. Thus, the installation is simplified. Further on, tolerance variations of the gaps are eliminated, as the visible portion is on the cabin-side of the panels, thus the gap is closed at its front and not at its back. The at least one recess is such designed that even in the case of negative tolerances the gap cover can be installed. This means, the at least one recess has an inner contour that is slightly bigger than an outer contour of the retaining portions.

The alternative solution has the advantage, that no recesses are necessary in the panel edges. This, simplifying the manufacturing.

Preferably, a plurality of retaining portions and a plurality of recesses is provided which are spaced apart from each other in a uniform distance. By this, a uniform engagement over the entire length of the cover is achieved

If the retaining portions are provided centrally on the intermediate portion, each recess has only to receive one half of the retaining portions. By means of this, the retaining portions abut against both panels backside in the same manner, thus improving the engagement.

Alternatively, the retaining portions are provided alternating on the intermediate portion and the recesses are provided correspondingly.

In order to facilitate the manufacturing of the retaining portions and the panels, according to one embodiment the retaining portions have a circular shape and the recesses have a semi-circular shape. However, neither the retaining portions nor the recesses are limited to a circular shape. Alternative shapes are rectangular ellipsoidal shapes, triangular shapes, rectangular shapes, square shapes etc.

If only one single retaining element is provided, advantageously it has a tapered shape extending over or almost over the entire length of the gap cover.

Alternatively, the single retaining portion can be divided up into multiple tapered sections which are spaced apart from another in longitudinal direction.

The engagement of the at least one retaining portion can be further improved, if it is inclined on its contact surface facing the panel. Thus, these retaining portions have a wedge-like contact surface.

In order to achieve an optimal alignment of the cover regarding the gap, spring elements are provided laterally on opposite sides of the intermediate portion. The spring elements cause a self-alignment of the intermediate portion in the gap in transverse direction and thus a self-alignment of the gap. Exemplary spring elements are spring tongue (spring clips).

Preferably, spring elements are positioned between at least some of the retaining portions and the visible portion. Due to this position, the spring element does not prevent the insertion of the retaining portions in the recesses. Alternatively, the spring elements are positioned between at least some of the or multiple tapered sections and the visible portion (14).

In particular, in order to enhance a self-alignment of the gap cover even if the gap has a tapered shape, the spring elements are adapted to the width of the gap such that the spring elements have different sizes.

According to the invention, a longitudinal gap cover for an aircraft interior arrangement comprises a visible portion facing towards the interior of the aircraft after installation. In addition, it has at least one retaining portion connected to the visible portion via at least one intermediate portion. The at least one retaining portion extend opposite the visible portion and is sized to abut and get into engagement backside of mutual adjacent interior panels of the aircraft interior arrangement.

The inventive gap cover is easy to install and to manufacture. In a preferred embodiment, it is an injection moulding part, for instance made from Polyamide 66 or PEEK.

According to the invention, an interior panel for an aircraft interior arrangement has an edge defining one side of a longitudinal gap to a mutual adjacent interior panel.

In the edge recesses are provided adapted to receive retaining portions of an inventive gap cover during installation.

Alternatively, the edge is inclined in longitudinal direction adapted to form one side of a tapered shaped gap to receive at least one retaining portion of a gap cover after installation. By means of this, it is possible to provide a recess-free edge. Nevertheless, it is also possible that combine both principles inclination and providing at least one recess.

The panel can be made of a foam material. It can also be made as a sandwich part, for instance a honey comb structure, wherein in order to simplify the introduction of the recesses a foam edge region is preferred surrounding a sandwich core. If no recesses are provided in the panel edges, the entire panel can be made as a sandwich element having a honey comb structure, for instance.

According to the invention, a method for installing an aircraft interior arrangement comprises the steps:
- Providing interior panels and mounting them to a fuselage structure of an aircraft, wherein a longitudinal gap is formed between mutual adjacent interior panels;
- Providing a longitudinal gap cover and positioning the gap cover in the gap such that the visible portion of the gap cover closes the gap and the recesses,
wherein the gap cover is moved in a first direction bringing the retaining portions backwards the panels and then pushing the cover in a second direction until the at least one retaining portion abuts and gets into engagement backside the interior panels. Advantageously, the gap cover has not to be pushed over the entire panel extension. Thus, less space for installation is required. As the pushing is reduced, the gap cover can be installed in a tighter way. Further on, thermal insulation is improved as the gap is closed reliable.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
Figure 1 a frontside view of an embodiment of an inventive aircraft interior lining arrangement;
Figure 2 a backside view of an inventive aircraft interior lining arrangement;
Figure 3 a perspective view of inventive gap covers;
Figure 4 a gap between adjacent inventive panels in an enlarged view;
Figure 5 an overlapping area of the gap covers in an enlarged view;
Figure 6 a detailed view on edges of adjacent inventive side panels;
Figure 7 spring elements of the inventive gap cover;
Figure 8 a detailed view of retaining portions of the inventive gap cover;
Figure 9 an installed gap cover in the area of the spring elements;
Figure 10 to 12 installation steps of the gap cover,
Figure 13 a side view of an alternative retaining portion;
Figure 14 a sectional view of a second embodiment of an inventive interior lining arrangement;
Figure 15 a frontside view of interior panels of a third inventive aircraft interior lining arrangement;
Figure 16 a perspective view of a gap cover according to the third embodiment; and

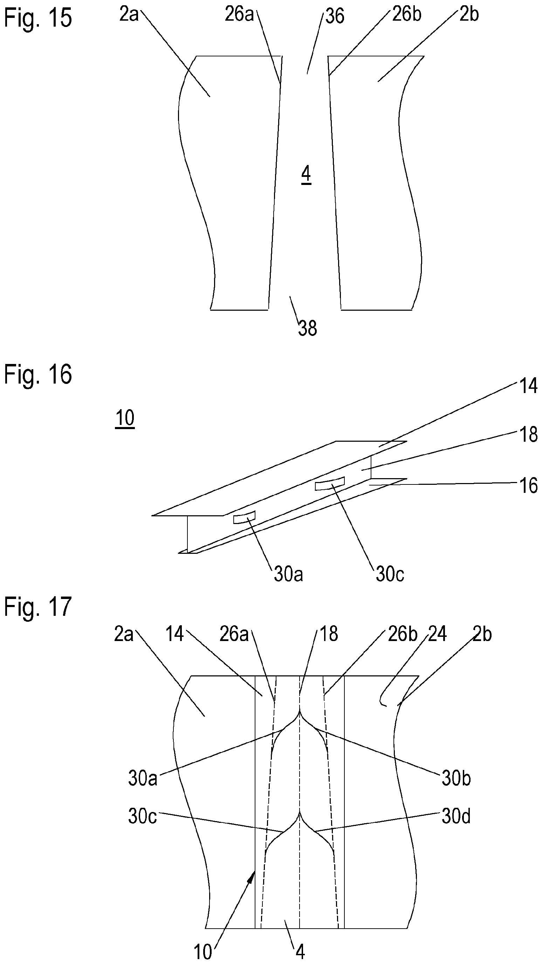

Figure 16 a frontside view of the third embodiment after installation of the gap cover.

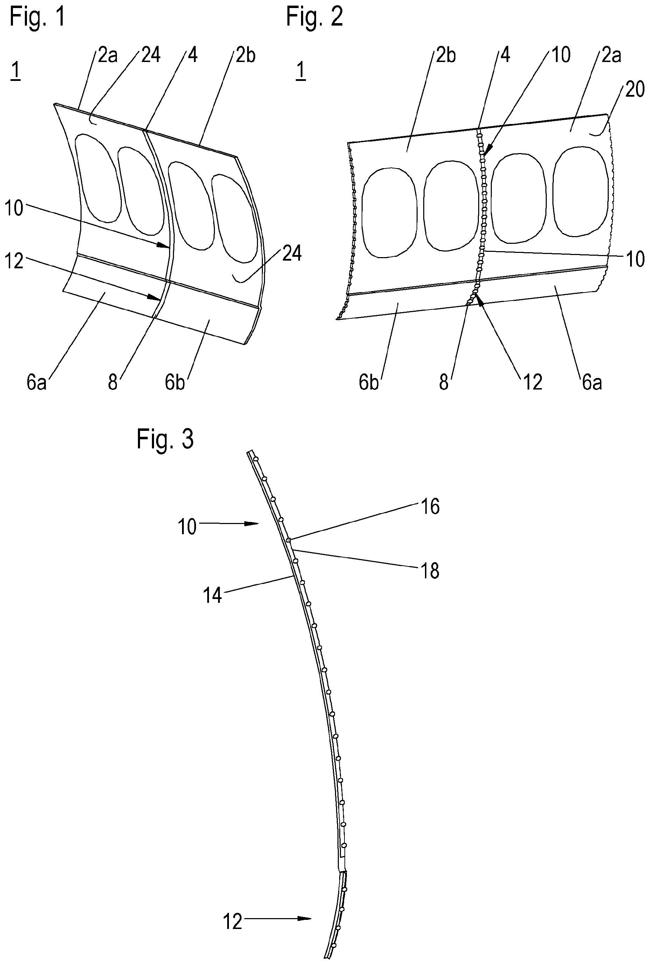

In Figures 1 and 2 a preferred embodiment of an inventive aircraft interior lining arrangement 1 is shown. The exemplary arrangement comprises mutual adjacent side panels 2a, 2b which are spaced apart from each other by a longitudinal gap 4. In addition, mutual adjacent dado panels 6a, 6b are shown which are overlapped at their top by the side panels 2a, 2b. The dado panels 6a, 6b are also space apart from each other by a gap 8, which is in alignment with the side panel gap 4.

The side panels 2a, 2b and dado panels 6a, 6b lining an aircraft interior and forms a cabin-side boundary of a space present between the interior lining arrangement and an aircraft structure. Beside side panels 2a, 2b and dado panels 6a, 6b, the interior lining may also comprises ceiling panels. The gaps 4, 8 extend over the entire height of the panels 2a, 2b, 6a, 6b and are extending from the cabin-side (frontside of the panels) to the installation space (backside of the panels).

In order to close both gaps 4, 8, longitudinal strip-shaped gap covers 10, 12 are provided. One gap cover 10 is provided to close the gap 4 between the side panels 2a, 2b and the other gap cover 12 is provided to close the gap 8 between the dado panels 6a, 6b. Both gap covers 10, 12 are designed and manufactured in the same manner. Preferably, they are manufactured via injection moulding.

As illustrated in Figure 3, each gap cover 10, 12 has a visible portion 14 and a plurality of retaining portions 16. The retaining portions 16 are connected to the visible portion 14 via an intermediate portion 18 and extend opposite the visible portion 14. They are such sized that they abut and get into engagement backside 20 of the side panels 2a, 2b and dado panels 6a, 6b.

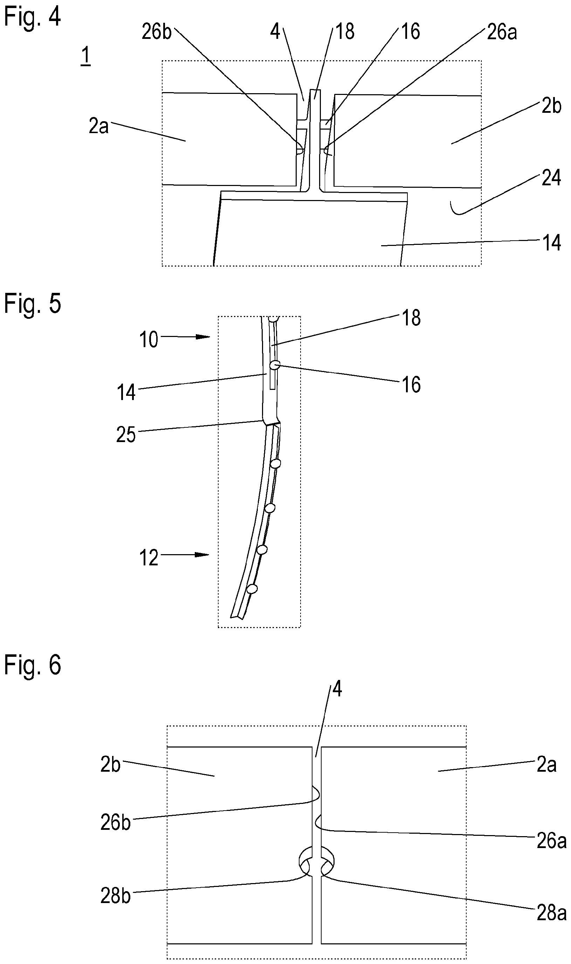

With respect to Figure 3 and Figure 4, the visible portion 14 has a strip-like shape. Its frontside is directed to the cabin-side, wherein after installation its underside 22 is drawn against the frontside 24 of the panels 2a, 2b, 6a, 6b via the retaining portions 18.

The retaining portions 16 have a disc-like shape with a circular contour. They are positioned centrally on the intermediate portions 18 in a uniform distance to each other over the entire length of the gap covers 10, 12.

The intermediate portion 18 has a web-like shape. It extends over the entire length or nearly over the entire length of the visible portion 14 and has a width (extension in transverse direction) which is smaller than a width of the gaps 4, 6.

The main difference between the side panel gap cover 10 and the dado panel gap cover 12 is the length which is adapted to the height of the side panels 2a, 2b and the dado panels 6a, 6b. In addition, as illustrated in more detail in Figure 5, as the side panels 2a, 2b overlap the dado panels 6a, 6b, the side panel gap cover 10 has an end portion 25 which is angled backwards and overlaps the dado gap cover 12 at its top.

For the sake of clarity, in the following the gap covers 10, 12 are explained preferably in respect to the side panels 2a, 2b.

As shown in Figure 6, in order to install the gap covers 10 in edges 26a, 26b of the side panels 2a, 2b (and also of the dado panels 6a, 6b) forming the respective gap 4, recesses 28a, 28b are provided. The recesses 28a, 28b are adapted to receive (put through) the retaining portions 16 during installation. The recesses 28a, 28b are distributed over the edges 26a, 26b in a distance that corresponds to the distance of the retaining portions 16 in longitudinal direction of the gap cover 10. If installed, the opposite recesses of the adjacent side panels 2a, 2b are aligned to each other. Further on, opposite recesses 28a, 28b have a shape that correspondence to the shape of the retaining portions 16. In the example shown here, as the retaining portions 16 have a disk like shape and are positioned centrally on the intermediate portion 18, each recess 28a, 28b has a semi-circular shape. The recesses 28a, 28b are such designed that even if a distance of the panels 2a, 2b, 4a, 4b in transversal direction of the gap 4, 8 is smaller than reference distance and/or an offset of the panels 2a, 2b, 6a, 6b in longitudinal direction of the gap 4, 8 exceeds a reference value, the gap covers 10, 12 can be installed. This means, the inner semicircular shape of the recesses 28a, 28b in the shown embodiment is slightly bigger than the outer circular contour of the retaining portions 16a, 16b.

In order to avoid any damage of the side panels 2a, 2b in their edge regions due to the recesses 28a, 28b, it is preferred if at least their edge regions are made of a foam material.

The recesses 28a, 28b are also closed by the visible portion 14 of the gap cover 10. Thus, the visible portion 14 have a width which is greater than the width of opposed recesses 28a, 28b of adjacent side panels 2a, 2b.

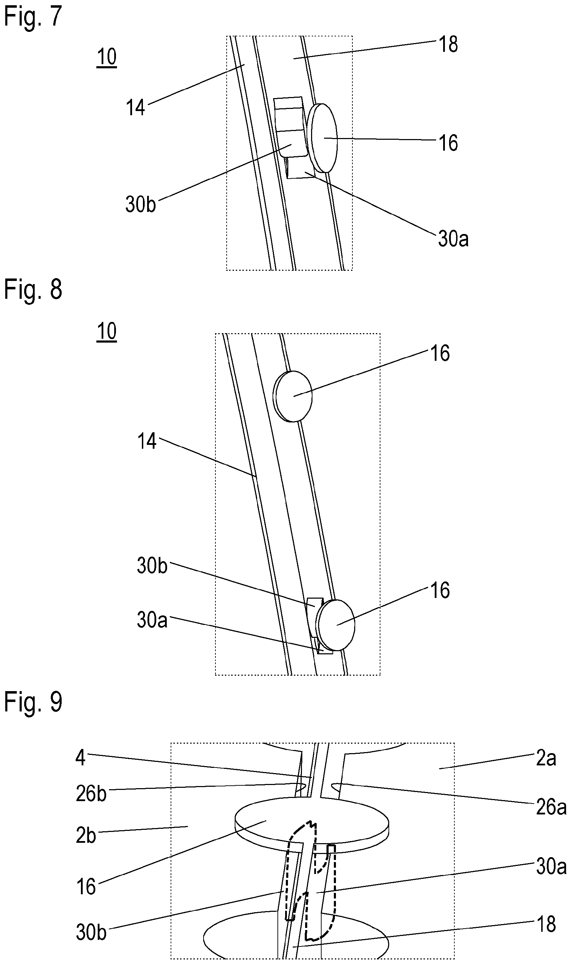

In Figure 7, lateral spring elements 30a, 30b of the gap covers 10, 12 is shown. The spring elements 30a, 30b are positioned opposite on the intermediate portion 18 between a retaining portion 16 and the visible portion 14. Thus, they are positioned after (behind, below) the respective retaining portion 16 in a first direction Y (inserting direction). As shown in Figure 8, the spring elements 30a, 30b can be provided only after some of the retaining portions 16.

The spring elements 30a, 30b are spring tongues, which are aligning the intermediate portion 18 in the gap 4 and thus the gap cover 10. In addition, the spring elements 30a, 30b equalise tolerance variations of the gaps 4. As illustrated in Figure 9, after installation of the gap cover 10, the spring elements 30a, 30b press against opposite sides of the edges 32a, 32b, and as a consequence, the intermediate portion 18 is positioned centrally in the gap 4, thus the gap cover 4 is positioned aligned to the gap 4 in transversal direction.

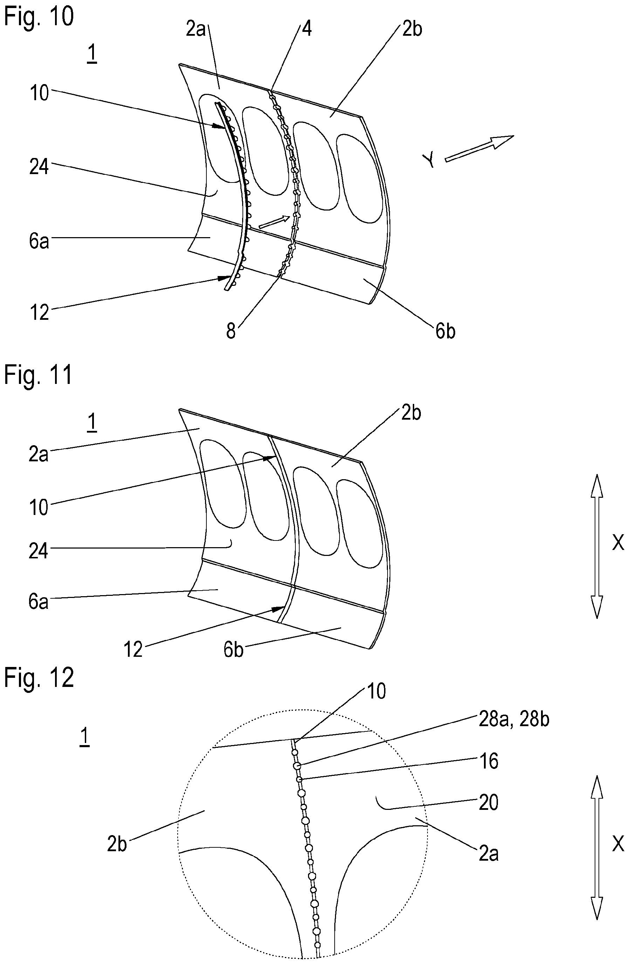

In the following, a preferred installation method according to the invention is shown. The inventive panels 2a, 2b, 6a, 6b are mounted to an aircraft fuselage structure, wherein longitudinal gaps are formed between mutual adjacent interior panels 2a, 2b and 6a, 6b. Then inventive longitudinal gap covers 10, 12 are provided. Each gap cover 10, 12 is moved in a first direction Y bringing the retaining portions 16 backwards the panels 2a, 2b and 6a, 6b (Figure 10). This means, firstly, the gap covers 10, 12 are positioned on the cabin-side of the panels 2a, 2b and 6a, 6b and then, secondly, the retaining portions 16 are put through (inserted into) the opposed recesses 28a, 28b of the adjacent panels 2a, 2b and 6a, 6b until the visible portion 14 abuts against the frontside 24 of the panels 2a, 2b and 6a, 6b. Then the gap covers 10, 12 are pushed in a second direction X upwards or downwards the gaps 4, 8 until the retaining portions 16 abut and get in engagement with the backside 20 of the panels 2a, 2b and 6a, 6b (Figure 11 and Figure 12). For instance, the gap covers 10, 12 are pushed so far along the gaps 4, 8 that the retaining portions 16 are positioned in the middle of adjacent recesses 28a, 28b in longitudinal direction. In other words, the installation is done from the cabin-side, wherein the retaining portions 16 are put through the recesses 28a, 28b in first direction Y which is perpendicular to the panels 2a, 2b, 6a, 6b. Then, the gap covers 10, 12 are moved shortly in a second direction x in longitudinal direction of the gaps 4, 8 and thus orthogonally to the first direction Y. The intermediate portion 18 is aligned automatically between the edges 26a, 26b by the spring elements 30a, 30b. As a consequence, the gap covers 10, 12 are clamped on the panels 2a, 2b, 6a, 6b and the gaps 10, 12 are closed from the cabin side.

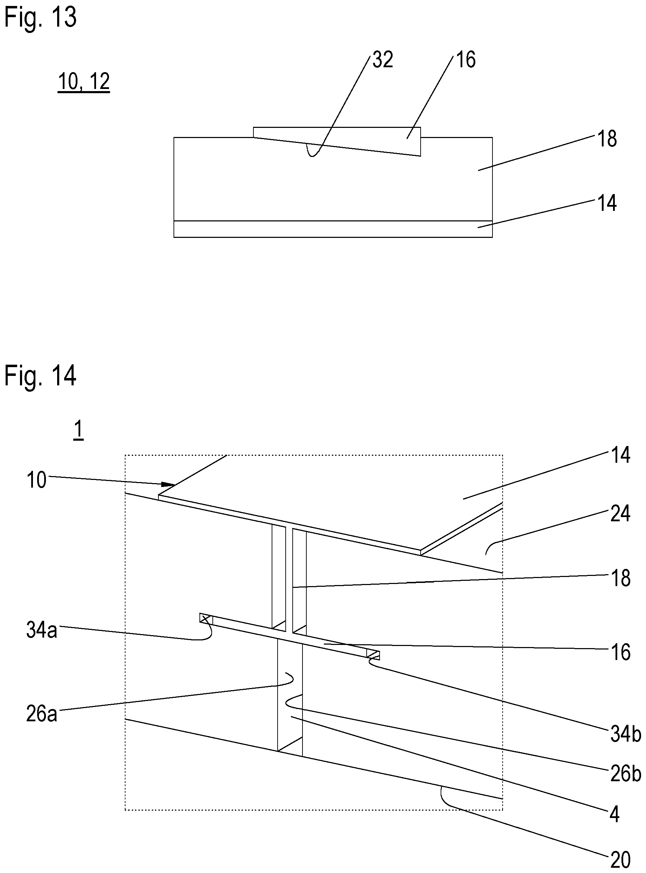

In Figure 13 a gap cover 10, 12 having an alternative retaining portion 16 is shown. In order to enhance the engagement with the backside 20 of the panels 2a, 2b, 6a, 6b, at least some retaining portions 16 can have a contact surface 32 (underside) which is inclined in the second direction X (pushing direction). Thus, these retaining portions 16 have a wedge-like shape which can improve the clamping of the gap covers 10, 12 on the panels 2a, 2b, 6a, 6b.

In Figure 14 a section-view of an alternative of an aircraft interior lining arrangement 1 is shown. The retaining portions 16 of a gap cover 10 are also positioned backside to the panels here exemplary side panels 2a, 2b, but being positioned in longitudinal grooves 34a, 34b of the side panels 2a, 2b. The groves 34a, 34b are opened to the gap 4 over their entire length. The advantage of this embodiment is that a backside 20 of the side panels 2a, 2b is free of any retaining portions 16.

In Figures 15, 16 and 17 an alternative embodiment of the inventive aircraft interior lining arrangement 1 is explained by reference to side panels 2a, 2b.

In contrast to the aforementioned embodiments of an aircraft interior lining arrangement 1, no recesses 28a, 28b for receiving a retaining portion 14 of a gap cover 10 are provided in edges 26a, 26b of the side panels 2a, 2b.

Instead of recesses 28a, 28b, the edges 26a, 26b forming the gap 4 are inclined such that the gap 4 has a tapered shape in its longitudinal direction. Here the gap 10 has its broadest area 36 at its bottom end and its narrowest area 38 at its top end.

It is noted that the inclination can be opposite, such that the broadest area 36 is at the top end of the gap 4 and the narrowest area 38 is at the bottom end of the gap 4. It is further noted that also only one edge, for instance 26a of panel 2a, can be inclined in longitudinal direction, whereas the facing edge 26b of the other panel 2b is not inclined in longitudinal direction, but runs straight.

In order to match with the tapered gap 10, the retaining portion 14 of the gap cover 10 is tapered correspondingly. The retaining portion 14 extends over the entire or almost over the entire length of the gap cover 10 (intermediate section 18). Here, a single retaining portion 14 is shown. However, it is noted that the single retaining portion 14 can also be divided up into several individual segments, each of them having an increasing tapered shape (or decreasing tapered shape which depends on the viewing direction).

A visible portion 12 of the gap cover is broader than the broadest area 36 of the gap 10 in order to close the gap 4 and in order to equalise tolerance variations.

In order to align the gap cover 10, similar to the preferred embodiments, several spring elements 30a, 30b, 30c, 30d are provided on opposite sides of the intermediate portion 18. However, as the gap 4 has a tapered shape, the spring elements 30a, 30b and 30d, 30e vary. This means, the spring elements 30a, 30b, which align the gap cover 10 in a smaller gap area does not have such an extension in transversal direction of the gap 4 as those spring elements 30c, 30d, which align the gap cover 10 in a larger gap area.

In order to install the gap cover 10, it is positioned with its retaining portion 14 facing the front side 24 of the panels 2a, 2b and then inserted into the gap 4 with an offset in vertical direction to the panels 2a, 2b (putting through the retaining portion 14 in a first direction Y). Then, the gap cover 10 is moved in s second direction X until the gap 4 is closed by the visible portion 12 and the retaining portion 14 abuts and is in engagement with the backside 20 of the panels 2a, 2b. In the illustrated embodiment, the gap cover 10 is moved upwards in the second direction y. The intermediate portion 18 is aligned automatically between the edges 26a, 26b by the spring elements 30a, 30b and 30c, 30d.

In order to enhance the engagement of the retaining portion 14 with the backside 20 of the panels 2a, 2b, its contact surface 32 can be inclined (not shown) as explained to the embodiment shown in Figure 13.

Disclosed is an aircraft interior lining arrangement wherein a gap cover having a visible portion and at least one rear retaining portions is installed from the frontside of lining panels in a first direction and then pushed in a second direction which is different to the first direction in order to get the gap cover in backside engagement with the panels, a gap cover, a panel and an installation method.

### Reference list

- 1: aircraft interior lining arrangement
- 2a, 2b: side panel
- 4: gap
- 6a, 6b: dado panel
- 8: gap
- 10: gap cover (for side panels)
- 12: gap cover (for dado panels)
- 14: visible portion
- 16: retaining portion
- 18: intermediate portion
- 20: backside (panel)
- 22: underside (visible portion)
- 24: frontside
- 25: end portion
- 26a, 26b: edge
- 28a, 28b: recess
- 30a to 30d: spring element
- 32: contact surface
- 34a, 34b: groove
- 36: broadest area (gap)
- 38: narrowest area (gap)

- Y: first direction
- X: second direction (longitudinal direction)

## Claims

1. An aircraft interior lining arrangement (1), comprising two mutually adjacent interior panels (2a, 2b, 6a, 6b) lining an interior of an aircraft, wherein the interior panels (2a, 2b, 6a, 6b) including edges (32a, 32b) facing one another to define a longitudinal gap (4, 6), and
• a longitudinal gap covering device (10, 12), further comprising:
o a visible portion (14) facing towards the interior of the aircraft after installation; and
o at least one retaining portion (16) connected to the visible portion (14) via at least one intermediate portion (18) and extending opposite the visible portion (14), wherein the at least one retaining portion (16) is sized to abut and get into engagement backside of the interior panels (2a, 2b, 6a, 6b);
wherein
• in the edges (32a, 32b) of the interior panels (2a, 2b, 6a, 6b) at least one recess (28a, 28b) is provided adapted to receive the at least one retaining portion (16) during installation; and
• wherein the visible portion (14) has a width which is adapted to cover the at least one recess (28a, 28b) after installation;
or wherein
• the edges (32a, 32b) of the interior panels (2a, 2b, 6a, 6b) are inclined to each other such that the gap (4, 8) has a tapered shape from its bottom end to its top end or vice versa; and
• wherein the visible portion (14) has a width which is adapted to cover the gap (4, 8) at its area with the broadest extension (36) in transversal direction after installation.

2. The aircraft interior lining arrangement according to claim 1, wherein multiple retaining portions (16) and multiple recesses (28a, 28b) are spaced apart from each other in a uniform distance.

3. The aircraft interior lining arrangement according to claims 1 or 2, wherein the retaining portions (16) are provided centrally on the intermediate portion and the recesses (28a, 28b) are adapted to receive one half of the retaining portions.

4. The aircraft interior lining arrangement according to claims 1 or 2, wherein the retaining portions (16) are provided alternating on the intermediate portion and the recesses (28a, 28b) are provided correspondingly.

5. The aircraft interior lining arrangement according to any of the preceding claims, wherein the retaining portions (16) have a circular shape and the recesses (28a, 28b) have a semi-circular shape.

6. The aircraft interior lining arrangement according to claim 1, wherein the at least retaining remaining portion (16) has a tapered shape extending over or almost over the entire length of the gap cover (10, 12).

7. The aircraft interior lining arrangement according to claim 6, wherein the at least retaining portion (16) is divided up into multiple tapered sections which are spaced apart from another in longitudinal direction (y).

8. The aircraft interior lining arrangement according to any of the preceding claims, wherein the at least some retaining portion (16) is inclined on its contact surface (34) facing the visible portions (14) .

9. The aircraft interior lining arrangement according to any of the preceding claims, wherein spring elements (30a, 30b, 30c, 30d) are provided laterally on opposite sides of the intermediate portion (18) .

10. The aircraft interior lining arrangement according to claim 9, wherein the spring elements (30a, 30b, 30c, 30d) are positioned between at least some of the retaining portions (16) and the visible portion (14) or between at least some of the or multiple tapered sections and the visible portion (14).

11. The aircraft interior lining arrangement according to claim 10, wherein the spring elements (30a, 30b, 30c, 30d) are adapted to the width of the gap (10, 12) such that the spring elements (30a, 30b, 30c, 30d) have different sizes.

12. A longitudinal gap cover (10, 12) for an aircraft interior lining arrangement (1) according to one of the preceding claims, comprising:
• a visible portion facing towards the interior of the aircraft after installation; and
• at least one retaining portions (16) connected to the visible portion (14) via at least one intermediate portion and extending opposite the visible portion (14);
wherein
the at least one retaining portion (16) is sized to abut and get into engagement backside of mutual adjacent interior panels (2a, 2b, 6a, 6b) of the aircraft interior line arrangement (1).

13. An interior panel (2a, 2b, 6a, 6b) for an aircraft interior arrangement (1) according to one of the preceding claims 1 to 12, having an edge (26a, 26b) defining one side of a longitudinal gap (4, 8) to a mutual adjacent interior panel (2a, 2b, 6a, 6b),
wherein
in the edge (26a, 26b) recesses (28a, 28b) are provided adapted to receive retaining portions (16) of a gap cover (10, 12) according to claim 12 during installation;
or wherein
the edge (26a, 26b) is inclined in longitudinal direction adapted to form one side of a tapered shaped gap (4, 8) to receive at least one retaining portion (16) of a gap cover (10, 12) according to claim 12 during installation.

14. Method for installing an aircraft interior lining arrangement (1) according to any of claims 1 to 8, comprising the steps:
• Providing interior panels (2a, 2b, 6a, 6b) according to claim 10 and mounting them to a fuselage structure of an aircraft, wherein a longitudinal gap is formed between mutual adjacent interior panels (2a, 2b, 6a, 6b); and
• Providing a longitudinal gap cover according to claim 9 and positioning the gap cover in the gap (4, 8) such that the visible portion of the gap cover (10 ,12) closes the gap (4, 8) and the recesses (28a, 28b);
wherein the gap cover is moved in first direction (Y) bringing the retaining portions (16) backwards of the panels (2a, 2b, 6a, 6b) and then pushing the gap cover (10, 12) in a second direction (X) until the at least one retaining portion (16) abuts and gets into engagement backside the interior panels (2a, 2b, 6a, 6b).
